# EUROPÄISCHE PATENTSCHRIFT

(11) **EP 1 106 393 B1**
(45) Veröffentlichungstag und Bekanntmachung des Hinweises auf die Patenterteilung: **29.03.2006**
(21) Anmeldenummer: 00125842.5
(22) Anmeldetag: 25.11.2000
(51) Int. Cl.: B60C 11/11

(54) **Fahrzeugluftreifen**
Vehicle tire
Bandage pneumatique pour véhicule

(30) Priorität: 02.12.1999 DE 19957915
(43) Veröffentlichungstag der Anmeldung: 13.06.2001
(73) Patentinhaber: Continental Aktiengesellschaft, 30165 Hannover (DE)
(72) Erfinder: Kaiser, Hinnerk, 30659 Hannover (DE); Diensthuber, Franz, 30559 Hannover (DE)

(56) Entgegenhaltungen:
- EP-A- 0 671 287
- EP-A- 0 729 854
- EP-A- 0 861 741
- US-A- 4 471 825
- DATABASE WPI Section Ch, Week 199634 Derwent Publications Ltd., London, GB; Class A95, AN 1996-338317 XP002170453 & JP 08 156528 A (BRIDGESTONE CORP), 18. Juni 1996 (1996-06-18)
- PATENT ABSTRACTS OF JAPAN vol. 011, no. 168 (M-594), 29. Mai 1987 (1987-05-29) & JP 62 001603 A (YOKOHAMA RUBBER CO LTD:THE), 7. Januar 1987 (1987-01-07)

## Beschreibung

Die Erfindung betrifft einen Fahrzeugluftreifen, insbesondere für den Einsatz unter winterlichen Fahrbedingungen, mit einem laufrichtungsgebundenen Laufstreifenprofil, welches durch eine zentrale Umfangsnut, durch weitere Umfangsnuten und durch Quernuten in je eine Schulterblockreihe und zwei mittleren Blockreihen gegliedert ist, die jeweils mit einer Vielzahl von im Wesentlichen in Profilquerrichtung und innerhalb der Profilblöcke jeweils zumindest im Wesentlichen parallel zueinander verlaufenden Einschnitten versehen sind, wobei die Blöcke in den mittleren Blockreihen in Reifenquerrichtung länger dimensioniert sind als in Umfangsrichtung.

PKW-Winterreifen mit derart ausgeführten Laufstreifenprofilen sind in verschiedenen Ausführungsvarianten bekannt. Auch eine Anzahl von Patenten und Patentanmeldungen befasst sich mit besonderen Ausgestaltungen solcher Laufstreifenprofile. Aus der EP-A-0 485 883 ist beispielsweise ein Fahrzeugluftreifen der eingangs genannten Art bekannt, dessen laufrichtungsgebunden gestaltetes Laufstreifenprofil derart in Blöcke gegliedert ist, dass sowohl die Blöcke in den mittleren Blockreihen als auch die Blöcke in den Schulterblockreihen in Umfangsrichtung durch relativ breite Quernuten komplett voneinander getrennt sind. Der Verlauf bzw. die Anordnung der schmalen Einschnitte in den einzelnen Profilblöcken ist so vorgenommen, dass sich jeder Einschnitt aus drei Abschnitten - einem ersten, einem zweiten und einem dazwischen liegenden Abschnitt - zusammensetzt, wobei beim Abrollen des Reifens jeweils der erste Abschnitt vor dem mittleren Abschnitt in die Kontaktfläche eintritt und der zweite Abschnitt die Kontaktfläche zuletzt verlässt. Durch diese Ausgestaltung wird auf gute Brems- und Lenkeigenschaften auf nassen Fahrbahnen und auf einen regelmäßigen Abrieb des Profils abgezielt. Das Profil weist eine konventionelle Gliederung in Einzelblöcke und somit insgesamt eine etwas weiche, eher unstabile Profilstruktur auf, die erfahrungsgemäß das Fahrverhalten beeinträchtigt, insbesondere was das Ansprechverhalten auf Lenkkräfte und die Geradeauslaufstabilität auf nassen und trockenen Fahrbahnen betrifft.

Aus der AT-B 404 341 ist ein PKW-Winterreifen mit einem laufrichtungsgebunden gestalteten Laufstreifenprofil bekannt, welches sich ebenfalls aus einer Schulterblockreihe und zwei mittleren Blockreihen zusammensetzt. Hier ist vorgesehen, dass in den beiden mittleren Blockreihen jeweils zwei in Umfangsrichtung benachbarte Blöcke an ihren der zentralen Umfangsnut benachbarten Bereichen miteinander verbunden sind. In diese paarweise miteinander verbundenen Blöcke ragt ausgehend von jener Umfangsnut, die diese Blöcke von den Schulterblöcken trennt, annähernd mittig je eine Sacknut. Durch diese Maßnahmen wird zwar die Profilsteifigkeit im Mittelbereich des Laufstreifens erhöht, es werden jedoch auch Ungleichmäßigkeiten in der Profilstruktur erzeugt, die strömungstechnisch nicht optimal sind, wodurch dieses Profil bezüglich der Wasserableitfähigkeit verbesserungswürdig ist.

Es ist nun gerade bei PKW-Winterreifen, die auf schnelleren Fahrzeugen gefahren werden, besonders wichtig, die Winterfahrtauglichkeit, das Aquaplaningverhalten und den Fahrkomfort gleichermaßen zu verbessern, da sich gerade bei solchen Reifen Mankos in der einen oder anderen Eigenschaft leicht bemerkbar machen.
Ein Fahrzeugluftreifen mit Merkmalen des Oberbegriffs des Patentanspruchs 1 ist aus der EP 0 729 854 A2 bekannt.

Ziel der gegenständlichen Erfindung ist es nun, für einen insbesondere für höhere Fahrgeschwindigkeiten geeigneten PKW-Winterreifen ein Laufstreifenprofil zur Verfügung zu stellen, bei welchem durch eine geeignete Profilgestaltung die Winterfahreigenschaften, die Wasserableitfähigkeit und das Fahrverhalten auf nassen und trockenen Fahrbahnen so aufeinander abgestimmt werden können, dass sich sämtliche dieser Eigenschaften auf ein hohes Niveau bringen lassen.

Gelöst wird die gestellte Aufgabe erfindungsgemäß dadurch, dass die Blöcke in den mittleren Blockreihen im Bereich der zentralen Umfangsnut in Umfangsrichtung aneinander gekoppelt sind und jeder dieser Blöcke durch eine zumindest im Wesentlichen in Umfangsrichtung verlaufende Teilungsnut in zwei im Wesentlichen gleich große und ebenfalls aneinander gekoppelte Blockteile gegliedert ist.

Sowohl die Anbindung der Blöcke in den mittleren Blockreihen in Umfangsrichtung als auch die Kopplung der durch die Teilungsnuten gebildeten Blockteile gestatten eine Beeinflussung der Profilsteifigkeit im Mittelbereich des Laufstreifens, durch die das Fahrverhalten optimiert werden kann. Die nach wie vor relativ weit zwischen die gekoppelten Blöcke hinein verlaufenden Quernuten, die zentrale Umfangsnut und die Teilungsnuten bewirken eine sehr günstige Durchströmung des Profils, wodurch das Aquaplaningverhalten und der Nassgriff optimiert werden. Sehr gute Winterfahreigenschaften sind einerseits durch die Einschnitte in den Blöcken und andererseits durch die in Längs- und Querrichtung zur Verfügung stehenden Blockkanten gewährleistet.

Zweckmäßigerweise wird zur Kopplung der Blöcke in Umfangsrichtung zwischen benachbarten Blöcken jeweils eine schmale und mit einer gegenüber der normalen Profiltiefe geringeren Tiefe ausgeführte Rille vorgesehen.

Auch die Teilungsnuten werden als schmale und mit einer gegenüber der normalen Profiltiefe geringeren Tiefe ausgeführte Nuten ausgebildet.

Sowohl die Rillen als auch die Teilungsnuten stellen daher sicher, dass die Profilstrukturen im Mittelbereich des Laufstreifens in einer für das Fahrverhalten günstigen Weise stabilisiert bzw. in ihrer Beweglichkeit eingeschränkt werden. Gleichzeitig ist jedoch auch gewährleistet, dass der Nassgriff und das Drainagevermögen des Profils verbessert werden sowie Längs- und Querkanten in hoher Anzahl für gute Griffeigenschaften auf winterlichen Fahrbahnen zur Verfügung stehen.

Für den Nassgriff und die Wasserableitfähigkeit des Profiles ist auch von Vorteil, wenn sich jede Teilungsnut, ausgehend von ihrem beim Abrollen des Reifens zuerst in den Untergrund eintretenden Ende, trompetenförmig erweitert. Eine Ausführung der Teilungsnut mit einem leicht bogenförmigen Verlauf trägt ebenfalls zu einer Optimierung des Wasserableitvermögens bei.

Die Stabilität der Profilstrukturen im Laufstreifenmittelbereich und das Drainagevermögens des Profils können dadurch gut aufeinander abgestimmt werden, wenn sowohl die Teilungsnuten als auch die Rillen, jeweils zumindest über einen Großteil ihrer Erstreckung, eine Tiefe von 2 bis 3 mm aufweisen.

Erfindungsgemäß ausgeführte Fahrzeugluftreifen werden, wie es üblich ist, mit einem laufstreifenprofil, welches nach dem Verfahren der Pitchlängenvariation geräuschoptimiert ist, ausgelegt. Gleichzeitig ist das erfindungsgemäße Laufstreifenprofil winkelkonstant ausgeführt, wobei in jeder Laufstreifenhälfte die Schulterblockreihe gegenüber der benachbarten mittleren Blockreihe in Umfangsrichtung versetzt angeordnet ist, wobei der Versatz in sämtlichen Pitches gleich groß und bis zu 30% der am Laufstreifenrand gemessenen Länge des längsten Pitch beträgt. Diese Ausgestaltung hat sich infolge der kurzen Wege als günstig für die Quer- und Längsentwässerung herausgestellt und stellt ferner eine für die Wintertauglichkeit des Profils günstige Anordnung von Griffkanten zur Verfügung.

Eine weitere Maßnahme zur Strömungsoptimierung besteht darin, dass die die weiteren Umfangsnuten begrenzenden Kanten der Blöcke abgerundet gestaltet und gegenüber der Umfangsrichtung leicht nach außen geneigt sind.

Für die Wintertauglichkeit vorteilhafte und in Längs- und Querrichtung wirkende Kanten werden ferner dadurch gebildet, dass die zentrale Umfangsnut zickzackförmig verläuft und ihre Eckbereiche abwechselnd durch vorspringende Kanten der Blöcke der mittleren Blockreihen und im Bereich der Einmündungen der Rillen gebildet sind.

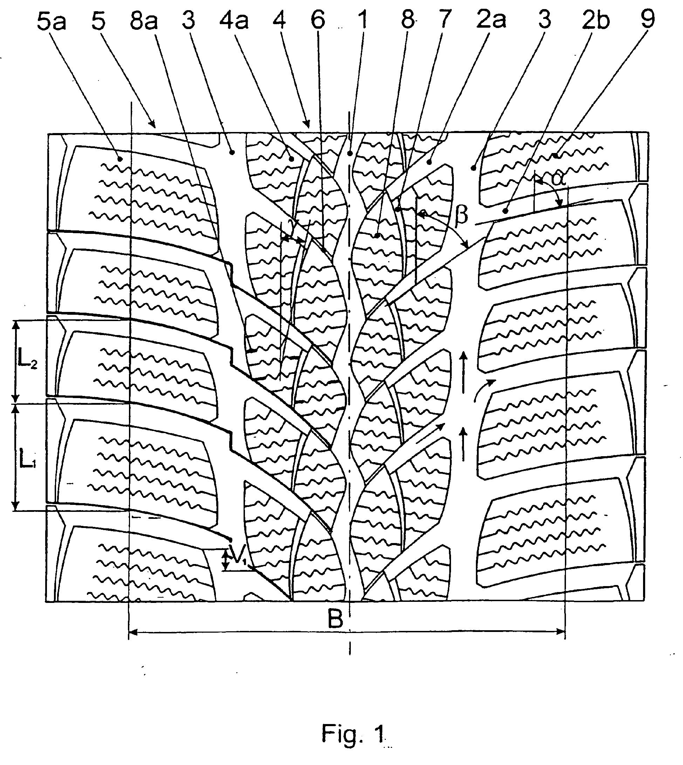

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur, der Fig. 1, eine Draufsicht auf eine Teilabwicklung eines Laufstreifenprofils dargestellt.

Das in der Zeichnungsfigur gezeigte Laufstreifenprofil ist insbesondere für PKW-Winterreifen vorgesehen. In der nun folgenden Beschreibung wird auf die Breite B des Laufstreifens Bezug genommen, die der Breite des Laufstreifens in der Bodenaufstandsfläche beim Abrollen des Reifens unter normalen Betriebsbedingungen (gemäß E.T.R.T.O. Standards Manual) entspricht.

Das dargestellte Laufstreifenprofil ist ein laufrichtungsgebunden gestaltetes Profil. Die Laufrichtungsgebundenheit entsteht durch den für die Quernuten gewählten Verlauf in den beiden Laufstreifenhälften. Die Quernuten verlaufen in Richtung zum Äquator in der Art von Pfeilspitzen. Die Anordnung der Reifen am Fahrzeug erfolgt derart, dass die im Bereich der Laufstreifenmitte gelegenen Endbereiche der Quernuten beim Abrollen des Reifens zuerst in die Bodenaufstandsfläche eintreten bzw. zuerst mit dem Untergrund in Berührung kommen.

Die Profilelemente des Laufstreifenprofils sind Blöcke bzw. Blockreihen, die im Wesentlichen durch eine Gliederung des Profils durch das Vorsehen von Quernutabschnitten 2a, 2b, einer zentralen Umfangsnut 1 und zwei weiterer Umfangsnuten 3 entstehen. Beidseitig der zwar ausgeprägten, aber etwas schmäler als die weiteren Umfangsnuten 3 ausgeführten zentralen Umfangsnut 1 verläuft je eine mittlere Blockreihe 4, an die, jeweils durch die weitere Umfangsnut 3 getrennt, je eine Schulterblockreihe 5 anschließt. Die Lage der Umfangsnuten 3 ist insofern von Bedeutung, als dass durch sie die wirksame Breite der Schulterblockreihen 5 beeinflusst wird. Es hat sich als vorteilhaft herausgestellt, wenn der gegenseitige Abstand der Umfangsnuten 3 - in Querrichtung zwischen den in Umfangsrichtung durch die Umfangsnuten 3 verlaufenden Mittellinien gemessen - zwischen 40 und 55% der Breite B gewählt wird.

Die Profilstrukturen in den beiden Laufstreifenhälften sind zwar übereinstimmend ausgestaltet, jedoch in Umfangsrichtung ca. um eine durchschnittliche halbe Pitchlänge gegeneinander versetzt, sodass das Profil bezüglich des Reifenäquators nicht symmetrisch gestaltet ist. Die zentrale Umfangsnut 1 ist eine zickzackförmig verlaufende Nut mit zumindest im Wesentlichen konstanter Breite. Der erwähnte Versatz der Profilstrukturen der beiden Laufstreifenhälften und die Zickzackform der Umfangsnut 1 haben zur Folge, dass die diese Nut 1 begrenzenden Kanten der Blöcke 4a der mittleren Blockreihen 4 nach innen weisende Eckbereiche aufweisen, die jedoch abgerundet ausgeführt sind. Die weiteren Eckbereiche der Zickzackform der Umfangsnut 1 liegen abwechselnd mit je einem der bereits erwähnten Eckbereiche dort, wo zwischen den in Umfangsrichtung benachbarten Blöcke 4a je eine schmale Rille 6 vorgesehen ist. Die gegenüber den Quernutabschnitten 2a, die zwischen den einzelnen in Umfangsrichtung benachbarten Blöcken 4a verlaufen, kurz ausgeführten Rillen 6 weisen eine geringe Tiefe in der Größenordnung von 2 bis 3 mm auf und bewirken eine Anbindung der Blöcke 4a aneinander und erhöhen die Steifigkeit der Profilstrukturen im Mittelbereich des Laufstreifens.

Sowohl die Rillen 6 als auch die erwähnten Quernutabschnitte 2a verlaufen unter einem Winkel β in der Größenordnung von 55° zur Umfangsrichtung des Profils. Es ist günstig, wenn der Verlauf der Quernutabschnitte 2a und der Rillen 6 so gewählt wird, dass der Winkel β zwischen 40° und 70° beträgt. Die Blöcke 4a bilden somit zur Querrichtung schräg gestellte Profilelemente, die ferner in dieser Richtung auch ihre größte Erstreckung besitzen.

Im Mittelbereich jedes Blockes 4a ist eine Teilungsnut 7 angeordnet, die im Wesentlichen in Umfangsrichtung verläuft bzw. gegenüber dieser unter einem Winkel γ in der Größenordnung von bis zu 15° geneigt ist. Die Teilungsnut 7 gliedert jeden Block 4a in zwei etwa gleich große Blockteile. Die Teilungsnuten 7 weisen eine Tiefe von etwa 2 bis 3 mm auf und reichen daher wie die Rillen 6 nicht bis auf die normale Profiltiefe, die in der Größenordnung von 7 bis 8 mm gewählt wird. Wie dargestellt können ferner die Teilungsnuten 7 leicht bogenförmig gekrümmt verlaufen. Von ihrer Breite her sind sie so ausgeführt, dass sie sich trompetenförmig erweitern, wobei das schmale Ende jenes ist, mit dem die Teilungsnuten 7 beim Abrollen des Reifens zuerst in den Untergrund eintreten. Die trompetenförmige Erweiterung wird insbesondere so gewählt, dass der schmale Endbereich eine Breite in der Größenordnung von 1 bis 1,5 mm, der breite Endbereich eine Breite von 2 bis 3 mm aufweist. Die Teilungsnuten 7 verbessern nicht nur den Nassgriff des Reifenprofils sondern auch das Fahrverhalten auf trockener Fahrbahn, da sie die Profilstrukturen im Mittelbereich des Laufstreifenprofits stabilisieren bzw. versteifen.

Die durch die beiden weiteren Umfangsnuten 3 von den mittleren Blockreihen 4 getrennten Schulterblockreihen 5 setzen sich jeweils aus Blöcken 5a zusammen, die in Umfangsrichtung durch weitere Quernutabschnitte 2b voneinander getrennt sind. Die Quernutabschnitte 2b sind jeweils über ihre Länge konstant breit ausgeführt und verlaufen unter einem Winkel α von ca. 80° zur Umfangsrichtung des Laufstreifenprofils. Der Winkel β wird im Allgemeinen zwischen 70° und 90° gewählt. Die die Umfangsnuten 3 begrenzenden Kanten der Blöcke 4a, 5a, sind leicht nach außen geneigt, wobei der zugehörige Winkel zur Umfangsrichtung etwa 3° bis 7° beträgt. Dadurch sind die Umfangsnuten 3 nicht als gerade in Umfangsrichtung umlaufenden Nuten ausgeführt, sondern setzen sich aus gegenüber dieser leicht schräg gestellten Nutabschnitten zusammen. Dabei werden die erwähnten geneigten Kanten bzw. Begrenzungsflächen der Blöcke 4a, 5a leicht abgerundet und somit strömungsoptimiert ausgeführt.

Das Laufstreifenprofil ist, wie es üblich ist, nach dem Verfahren der Pitchlängenvariation geräuschoptimiert. Wie es aus der Zeichnungsfigur ersichtlich ist, sind bei der dargestellten Ausführungsform zwei unterschiedlich lange Pitches der Längen L₁ und L₂, die jeweils einen Block 5a aus der Schulterblockreihe 5 und einen Block 4a aus der mittleren Blockreihe 4 mit einem der benachbarten Quernutabschnitte 2a, 2b umfassen, vorgesehen. Die Anordnung der Pitches über den Reifenumfang ist nicht Gegenstand der Erfindung und wird nach einem der üblichen Verfahren rechnerisch ermittelt bzw. optimiert.

Das Profil ist, was den Verlauf der Quernutabschnitte 2a, 2b und der Rillen 6 betrifft, winkelkonstant ausgelegt. Das heißt, dass die Größe der Winkel α und β bei einer bestimmten Ausführungsform des Profils und für eine bestimmte Reifengröße gewählt wird und im gesamten Profil gleich ist. Die Schulterblöcke 5a sind ferner gegenüber den Blöcken 4a der mittleren Blockreihen 4 in Umfangsrichtung etwas versetzt. Dabei wird jedoch auf eine strömungstechnisch günstige Anordnung geachtet, was in der Zeichnungsfigur durch die Pfeile in der rechten Laufstreifenhälfte verdeutlicht ist. Der gegenseitige Versatz, der Abstand V₁, der Schulterblockreihe 5 zur mittleren Blockreihe 4 ist infolge der Winkelkonstanz überall gleich groß. Wie es aus der Zeichnungsfigur hervorgeht, ist V, der in Umfangsrichtung gemessene Abstand zwischen jenem bei der Umfangsnut 3 liegenden Eckbereich eines Schulterblocks 5a, der beim Abrollen zuerst in den Untergrund eintritt, und dem in Abrollrichtung nächsten bei der Umfangsnut 3 liegenden Eckbereich des Blocks 4a aus der mittleren Blockreihe 4. Dieser Eckbereich tritt übrigens beim Abrollen vor dem erwähnten Eckbereich des Schulterblocks 1 a in den Untergrund ein. Die Größe des Abstandes V₁ sollte mindestens 1 mm, insbesondere mindestens 2 mm betragen und höchstens 30% der längsten Pitchlänge, hier L₁.

Durch diese Maßnahme wird das Profil strömungstechnisch optimiert und auch bezüglich der Winterfahreigenschaften deutlich verbessert.

Sämtliche Profilelemente des Laufstreifens, demnach sämtliche Blöcke 4a und 5a, sind jeweils mit einer Vielzahl von innerhalb des betreffenden Blocks 4a, 5a gleichmäßig verteilt angeordneten und zueinander parallel verlaufenden Einschnitten 8, 9 versehen. Die dargestellten Einschnitte 8, 9 sind zumindest über einen Großteil ihrer Erstreckung wellenförmig bzw. zickzackförmig gestaltet. Diese die Griffeigenschaften auf schneeigem oder eisigem Untergrund erhöhenden Einschnitte 8, 9 weisen eine Breite in der Größenordnung von 0,3 bis 0,6 mm, insbesondere von 0,4 mm, auf und können mit konstanter Tiefe oder mit sich über ihren Verlauf ändernder Tiefe ausgeführt werden. Die Einschnitte 9 in den Blöcken 5a der Schulterblockreihen 5 besitzen eine Erstreckungsrichtung, die mit dem Verlauf der zwischen den einzelnen Blöcken 5a angeordneten Quernutabschnitte 2b zumindest im Wesentlichen übereinstimmt. Die Einschnitte 8 in den Blöcken 4a der mittleren Blockreihen 4 durchqueren die Blöcke 4a in einer Richtung jeweils gegensinnig zur Erstreckungsrichtung der Einschnitte in den Schulterblöcken 5a derselben Laufstreifenhälfte. Die Einschnitte 8 weisen jedoch eine Erstreckungsrichtung auf, die nur geringfügig von der Querrichtung des Profils abweicht und sind durch die Teilungsnuten 7 unterbrochen.

Eine bevorzugte Ausgestaltung der Einschnitte 8 in den Blockteilen der Blöcke 4a sieht vor, dass in jedem Blockteil die Einschnitte 8 so ausgeführt sind, dass abwechselnd ihre in die Umfangsnuten 1, 3 und die Teilungsnuten 7 mündenden Abschnitte eine geringere Tiefe besitzen. Dieses wechselseitige Anheben des Einschnittgrundes in den Endabschnitten bewirkt eine Stabilisierung der Blöcke 4a, was wiederum günstige Auswirkungen auf das Fahrverhalten hat. Dieses wechselseitige Anheben wird dabei zumindest in den Einschnitten 8 im Mittelbereich der Blockteile vorgesehen. In der Zeichnungsfigur ist diese Maßnahme in einem der Blöcke 4a durch ein Hervorheben der betreffenden Endabschnitte 8a der Einschnitte 8 eingezeichnet.

## Patentansprüche

1. Fahrzeugluftreifen, insbesondere für den Einsatz unter winterlichen Fahrbedingungen, mit einem laufrichtungsgebundenen Laufstreifenprofil, welches durch eine zentrale Umfangsnut, durch weitere Umfangsnuten und durch Quernuten in je eine Schulterblockreihe und zwei mittleren Blockreihen gegliedert ist, deren Profilblöcke jeweils mit einer Vielzahl von im Wesentlichen in Profilquerrichtung und innerhalb der Profilblöcke jeweils zumindest im Wesentlichen parallel zueinander verlaufenden Einschnitten versehen sind, wobei die Blöcke in den mittleren Blockreihen in Reifenquerrichtung länger dimensioniert sind als in Umfangsrichtung, wobei sämtliche Blöcke (4a) in den mittleren Blockreihen (4) im Bereich der zentralen Umfangsnut (1) in Umfangsrichtung aneinander gekoppelt sind und jeder dieser Blöcke (4a) durch eine zumindest im Wesentlichen in Umfangsrichtung verlaufende Teilungsnut (7) in zwei im Wesentlichen gleich große und ebenfalls aneinander gekoppelte Blockteile gegliedert ist,
**dadurch gekennzeichnet, dass**
das Laufstreifenprofil nach dem Verfahren der Pitchlängenvariation geräuschoptimiert ist und ferner winkelkonstant ausgelegt ist, wobei in jeder Laufstreifenhälfte die Schulterblockreihe (5) gegenüber der mittleren Blockreihe (4) in Umfangsrichtung versetzt ist, wobei der Versatz (V₁) in sämtlichen Pitches gleich groß und bis zu 30 % der am Laufstreifenrand gemessenen Länge (L₁) des längsten Pitch beträgt.

2. Fahrzeugluftreifen nach Anspruch 1, **dadurch gekennzeichnet, dass** die Blöcke (4a) in den mittleren Blockreihen (4) im Bereich der zentralen Umfangsnut (1) jeweils nur durch eine schmale und mit einer gegenüber der normalen Profiltiefe mit geringerer Tiefe ausgeführten Rille (6) getrennt sind.

3. Fahrzeugluftreifen nach Anspruch 1, **dadurch gekennzeichnet, dass** auch jede Teilungsnut (7) als schmale und mit einer gegenüber der normalen Profiltiefe geringeren Tiefe ausgeführte Nut ausgebildet ist.

4. Fahrzeugluftreifen nach Anspruch 1 oder 3, **dadurch gekennzeichnet, dass** sich jede Teilungsnut (7), ausgehend von ihrem beim Abrollen des Reifens zuerst in den Untergrund eintretenden Ende, trompetenförmig erweitert, und dass vorzugsweise jede Teilungsnut (7) leicht bogenförmig verläuft.

5. Fahrzeugluftreifen nach einem der Ansprüche 1 bis 4, **dadurch gekennzeichnet, dass** die Teilungsnuten (7) und die Rillen (6) zumindest über einen Großteil ihrer Erstreckung eine Tiefe von 2 bis 3 mm aufweisen.

6. Fahrzeugluftreifen nach einem der Ansprüche 1 bis 5, **dadurch gekennzeichnet, dass** die die weiteren Umfangsnuten (3) begrenzenden Kanten der Blöcke (4a, 5a) abgerundet gestaltet und gegenüber der Umfangsrichtung leicht nach außen geneigt sind.

7. Fahrzeugluftreifen nach einem der Ansprüche 1 bis 6, **dadurch gekennzeichnet, dass** die zentrale Umfangsnut (1) zickzackförmig verläuft und ihre Eckbereiche abwechselnd durch vorspringende Kanten der Blöcke (4a) der mittleren Blockreihen (4) und im Bereich der Einmündungen der Rillen (6) gebildet sind.

## Claims

1. Pneumatic vehicle tyre, in particular for use in winter driving conditions, having a tread rubber profile associated with the running direction, which is divided by a central circumferential groove, by further circumferential grooves and by transverse grooves into in each case a shoulder block row and two central block rows, the profile blocks of which are respectively provided with a multiplicity of indentations running essentially in the transverse direction of the profiles and, within the profile blocks, in each case at least essentially parallel to one another, the blocks in the central block rows being made longer in the transverse direction of the tyre than in the circumferential direction, all the blocks (4a) in the central block rows (4) being coupled to one another in the circumferential direction in the region of the central circumferential groove (1) and each of these blocks (4a) being divided by a dividing groove (7), running at least essentially in the circumferential direction, into two block parts that are essentially of the same size and likewise coupled to each other, **characterized in that** the tread rubber profile is noise-optimized by the process of pitch length variation and, furthermore, is designed to be angularly constant, the shoulder block row (5) being offset in the circumferential direction with respect to the central block row (4) in each tread rubber half, the offset (V₁) being of the same size in all the pitches and up to 30% of the length (L₁) of the longest pitch, measured at the edge of the tread rubber.

2. Pneumatic vehicle tyre according to Claim 1, **characterized in that** the blocks (4a) in the central block rows (4) are respectively separated in the region of the central circumferential groove (1) only by a channel (6) that is narrow and made with a depth smaller than the normal profile depth.

3. Pneumatic vehicle tyre according to Claim 1, **characterized in that** every dividing groove (7) is also formed as a groove that is narrow and made with a depth smaller than the normal profile depth.

4. Pneumatic vehicle tyre according to Claim 1 or 3, **characterized in that** every dividing groove (7), starting from its end that first enters the underlying surface during rolling of the tyre, widens in a flared manner, and **in that** every dividing groove (7) preferably runs in a slightly arcuate manner.

5. Pneumatic vehicle tyre according to one of Claims 1 to 4, **characterized in that** the dividing grooves (7) and the channels (6) have a depth of 2 to 3 mm, at least over a large part of their extent.

6. Pneumatic vehicle tyre according to one of Claims 1 to 5, **characterized in that** the edges of the blocks (4a, 5a) bounding the further circumferential grooves (3) are shaped in a rounded manner and are inclined slightly outwards with respect to the circumferential direction.

7. Pneumatic vehicle tyre according to one of Claims 1 to 6, **characterized in that** the central circumferential groove (1) runs in a zigzag form and its corner regions are formed alternately by projecting edges of the blocks (4a) of the central block rows (4) and in the region of the mouths of the grooves (6).

## Revendications

1. Bandage pneumatique pour véhicules, en particulier destiné à l'utilisation en conditions hivernales, doté d'un profil de bande de roulement associé à la direction de roulement, divisé par une rainure périphérique centrale, des rainures périphériques supplémentaires et des rainures transversales en séries respectives de blocs d'épaulement et en deux séries médianes de blocs, les blocs profilés étant tous dotés d'un grand nombre d'entailles sensiblement parallèles les unes aux autres, essentiellement dans le sens transversal du profil et à l'intérieur des blocs profilés, les blocs de la série médiane étant plus longs dans le sens transversal du pneu que dans le sens de sa circonférence, tous les blocs (4a) des séries médianes (4) dans la région de la rainure périphérique centrale (1) étant accouplés les uns aux autres dans le sens de la circonférence et chacun de ces blocs (4a) étant scindé par une rainure de séparation (7) qui s'étend essentiellement dans le sens de la circonférence du pneu en deux parties de blocs également accouplées l'une à l'autre et de taille essentiellement identique,
**caractérisé en ce que** le profil de bande de roulement est optimisé en termes de bruit par la technique de variation de la longueur du pas et est en outre conçu à angle constant, la série (5) de blocs d'épaulement de chaque moitié de bande de roulement étant décalée par rapport à la série médiane (4) de blocs dans le sens de la circonférence du pneu, le décalage (V₁) présentant pour tous les pas une même valeur et valant jusque 30 % de la longueur (L₁) du pas le plus long mesurée sur le bord de la bande de roulement.

2. Bandage pneumatique pour véhicules selon la revendication 1, **caractérisé en ce que** dans la zone de la rainure périphérique centrale (1), tous les blocs (4a) des séries médianes (4) de blocs sont séparés par un sillon (6) de profondeur inférieure à la profondeur normale du profil.

3. Bandage pneumatique pour véhicules selon la revendication 1, **caractérisé en ce que** chaque rainure de séparation (7) est, également réalisée à une profondeur inférieure à la profondeur normale du profil.

4. Bandage pneumatique pour véhicules selon les revendications 1 ou 3, **caractérisé en ce que** partant de son extrémité qui pénètre en premier dans le sol lorsque le pneu roule, chaque rainure de séparation (7) s'évase en trompette et **en ce que** chaque rainure de séparation (7) a une forme légèrement arquée.

5. Bandage pneumatique pour véhicules selon une des revendications 1 à 4, **caractérisé en ce que** les rainures de séparation (7) et les sillons (6) ont une profondeur d'au moins 2 à 3 mm sur une grande partie de leur extension.

6. Bandage pneumatique pour véhicules selon une des revendications 1 à 5, **caractérisé en ce que** les bords des blocs (4a, 5a) qui délimitent les rainures périphériques supplémentaires (3) ont une forme arrondie et sont inclinés vers l'extérieur par rapport au sens de la circonférence du pneu.

7. Bandage pneumatique pour véhicules selon l'une des revendications 1 à 6, **caractérisé en ce que** la rainure périphérique centrale (1) s'étend en zigzag et **en ce que** ses coins sont formés de manière alternée par des côtés saillants des blocs (4a) des rangées médianes (4) de blocs et dans la zone de l'embouchure des sillons (6).
